# EUROPÄISCHE PATENTANMELDUNG

(11) **EP 3 381 636 A1**
(43) Veröffentlichungstag der Anmeldung: **03.10.2018**
(21) Anmeldenummer: 17163238.3
(22) Anmeldetag: 28.03.2017
(51) Int. Cl.: B29B 15/12, B29C 70/52, B29K 101/12

(54) **BENETZUNGSDÜSE MIT BENETZUNGSTASCHEN ZUR HERSTELLUNG EINES MIT POLYMER BENETZTEN FASERBANDS, VERFAHREN ZUR HERSTELLUNG DIESES FASERBANDS UND EIN BENETZTES FASERBAND**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Gegenstand der vorliegenden Erfindung ist eine Benetzungsdüse mit Benetzungstaschen zur Herstellung eines mit Polymer benetzten Faserbands. Die Benetzungsdüse ist als Breitschlitzdüse mit einem Benetzungsschlitz ausgeführt. Dabei weist die Benetzungsdüse anschließend an aber getrennt von den beiden seitlichen Enden des Benetzungsschlitzes jeweils eine Benetzungstasche auf, wobei die Benetzungstaschen in Vorschubrichtung des benetzten Faserbands fortgesetzt sind.

Gegenstand der vorliegenden Erfindung ist auch ein Verfahren zur kontinuierlichen Herstellung eines mit Polymer benetzten Faserbands mit unidirektional in Laufrichtung des benetzten Faserbands ausgerichteten Endlosfasern unter Verwendung der erfindungsgemäßen Benetzungsdüse.

## Beschreibung

Gegenstand der vorliegenden Erfindung ist eine Benetzungsdüse mit Benetzungstaschen zur Herstellung eines mit Polymer benetzten Faserbands. Die Benetzungsdüse ist als Breitschlitzdüse mit einem Benetzungsschlitz ausgeführt. Dabei weist die Benetzungsdüse anschließend an aber getrennt von den beiden seitlichen Enden des Benetzungsschlitzes jeweils eine Benetzungstasche auf, wobei die Benetzungstaschen in Vorschubrichtung des benetzten Faserbands fortgesetzt sind.

Gegenstand der vorliegenden Erfindung ist auch ein Verfahren zur kontinuierlichen Herstellung eines mit Polymer benetzten Faserbands mit unidirektional in Laufrichtung des benetzten Faserbands ausgerichteten Endlosfasern unter Verwendung der erfindungsgemäßen Benetzungsdüse.

Weiterer Gegenstand der vorliegenden Erfindung ist auch ein imprägniertes Faserband, dass mit der erfindungsgemäßen Vorrichtung oder dem erfindungsgemäßen Verfahren hergestellt werden kann. Das imprägnierte Faserband wird dabei aus dem benetzten Faserband durch mindestens einen weiteren Verfahrensschritt, einem oder mehreren Imprägnierschritten, hergestellt.

Die längste Achse eines Faserbands wird auch Laufrichtung genannt. Unter "Endlosfaser" wird verstanden, dass die Länge der verstärkenden Faser im Wesentlichen der Abmessung des zu benetzenden Faserbands in der Ausrichtung der Faser entspricht. Unter "unidirektional" im Zusammenhang mit "Faser" wird verstanden, dass die Fasern im Faserband in nur einer Richtung ausgerichtet sind. Die Vorschubrichtung ist die Richtung, in der das Faserband während der Herstellung des benetzten Faserbands vorwärts bewegt wird. Vorschubrichtung und Laufrichtung sind parallel zueinander, die Vorschubrichtung weist aber durch die Vorwärtsbewegung des Faserbands während der Herstellung des benetzten Faserbands auch einen Richtungssinn auf.

Der Einsatz von faserverstärkten Materialien hat auf Grund ihrer ausgezeichneten spezifischen Eigenschaften in den letzten Dekaden stetig zugenommen. Insbesondere bei beschleunigten Strukturen werden faserverstärkte Materialien eingesetzt, um ohne Verluste bei der Festigkeit und Steifigkeit des Materials eine Gewichtsreduktion zu ermöglichen und so den Energieverbrauch zu minimieren.

Bei einem faserverstärkten Material, auch Faserverbundwerkstoff oder kurz Verbundwerkstoff genannt, handelt es um einen mindestens zweiphasigen Werkstoff, der aus einem Matrixmaterial besteht, in dem Fasern im Wesentlichen vollständig eingebettet und ummantelt sind. Die Matrix hat eine formgebende Funktion, soll die Fasern vor äußeren Einflüssen schützen und ist notwendig, um Kräfte zwischen den Fasern zu übertragen sowie äußere Lasten einzuleiten. Die Fasern tragen maßgeblich zur mechanischen Leistungsfähigkeit des Werkstoffs bei, wobei in der Industrie häufig Glas-, Carbon-, Polymer-, Basalt-, oder Naturfasern zum Einsatz kommen. Als Matrixmaterial werden - abhängig vom Einsatzzweck - im Allgemeinen duroplastische oder thermoplastische Polymere eingesetzt, vereinzelt auch Elastomere.

Duroplastische Polymere sind bereits in zahlreichen Industrien seit langem etabliert. Ein entscheidender Nachteil ist jedoch die lange Aushärtungszeit, die bei der Verarbeitung zu Bauteilen zu entsprechend langen Zykluszeiten führt. Dies macht duroplastbasierte Verbundwerkstoffe vor allem für Industrieanwendungen mit hohen Stückzahlen unattraktiv. Thermoplastbasierte Verbundwerkstoffe hingegen werden häufig, soweit sie als bereits vollkonsolidierte Halbzeuge vorliegen, z.B. als endlosfaserverstärkte Platten oder Profile, bei der Weiterverarbeitung lediglich aufgeheizt, umgeformt und abgekühlt, was heutzutage in Zykluszeiten deutlich unter einer Minute zu realisieren ist. Darüber hinaus lässt sich die Verarbeitung mit weiteren Prozessschritten wie z.B. dem Hinterspritzen mit Thermoplasten kombinieren, wodurch ein sehr hoher Grad an Automatisierung und Funktionsintegration erreicht werden kann.

Als Verstärkungsmaterial werden im Wesentlichen textile Halbzeuge wie Gewebe, mehrlagige Gelege oder Non-wovens (auch Vliese oder Wirrfasermatten genannt) verwendet. Diese Formen der Faserverstärkung zeichnen sich dadurch aus, dass bereits im textilen Halbzeug die Ausrichtung der Faser - und somit der Kraftpfade im späteren Bauteil - festgelegt ist. Dies ermöglicht zwar die direkte Herstellung eines multidirektional verstärkten Verbundwerkstoffes, hat aber Nachteile hinsichtlich der Flexibilität des Lagenaufbaus, der mechanischen Eigenschaften und der Wirtschaftlichkeit. Bei thermoplastbasierten Systemen werden diese textilen Halbzeuge üblicher Weise unter Druck und Temperatur mit Polymer imprägniert und anschließend als ausgehärtete Platte zugeschnitten und weiterverarbeitet.

Neben diesen bereits etablierten Systemen auf Basis von textilen Halbzeugen gewinnen thermoplastbasierte Tapes, also mit einem thermoplastischen Polymer imprägnierte Faserbänder, zunehmend an Bedeutung. Diese bieten Vorteile in der Wirtschaftlichkeit, da der Prozessschritt der textilen Halbzeugherstellung eingespart werden kann. Diese thermoplastbasierten Tapes eignen sich zur Herstellung von mehrlagigen Aufbauten, insbesondere auch zur Herstellung von multidirektionalen Aufbauten. Sofern hier nur von "Faserbänder" die Rede ist, sind damit sowohl mit Thermoplast benetzte Faserbänder, kurz auch "benetzte Faserbänder", mit Thermoplast imprägnierte Faserbänder, kurz auch "imprägnierte Faserbänder" genannt, und nicht-benetzte und nicht-imprägnierte Faserbänder gemeint. Im Sinne der vorliegenden Erfindung bedeutet "benetztes Faserband" ein Faserband, bei dem in einem betrachteten Längenabschnitt das gesamte Faserband mindestens äußerlich von Thermoplast umgeben ist. Dabei muss aber nicht jede einzelne Faser unmittelbar von Thermoplast umgeben sein; es reicht, wenn die an der Oberfläche des Faserband liegenden Oberflächen der Fasern mit Thermoplast umgeben sind. Im Sinne der vorliegenden Erfindung bedeutet "imprägniertes Faserband" ein Faserband, bei dem in einem betrachteten Längenabschnitt wenigstens 80 % der Oberfläche aller Fasern mit dem jeweils eingesetzten Thermoplasten unmittelbar umgeben sind; dazu muss aber nicht die Oberfläche jeder Faser zu wenigstens 80 % unmittelbar mit Thermoplast umgeben sein, es reicht, wenn die Summe der Oberflächen aller Fasern zu wenigstens 80 % unmittelbar mit Thermoplast umgeben ist. Ein solcher Längenabschnitt hat vorzugsweise eine Länge von mindestens 10 mm, weiter vorzugsweise mindestens 100 mm, besonders vorzugsweise mindestens 500 mm, insbesondere vorzugsweise mindestens 1000 mm.

Ein Verfahren und eine Vorrichtung zur Herstellung eines unidirektional endlosfaserverstärkten imprägnierten Faserbands ist beispielsweise in der WO 2012 123 302 A1, deren Offenbarung hiermit vollumfänglich in die Beschreibung der vorliegenden Erfindung mit einbezogen wird, beschrieben.

Bei der in der WO 2012 123 302 A1 offenbarten Vorrichtung, insbesondere in den Fig. 1 und 3 und den zugehörigen Teilen der Beschreibung, ist mit dem Bezugszeichen 12 auch eine Benetzungsdüse, dort Auftragseinrichtung genannt, vorgesehen. Diese Benetzungsdüse weist eine Breitschlitzdüse (in WO 2012 123 302 A1 mit dem Bezugszeichen 14 versehen) auf, bei der ein Düsenkanal (in WO 2012 123 302 A1 mit dem Bezugszeichen 15 versehen) mit einem Schmelzevolumen (in WO 2012 123 302 A1 mit dem Bezugszeichen 13 versehen) verbunden ist.

Die in der WO 2012 123 302 A1 offenbarte Vorrichtung hat als ersten Nachteil, dass an den äußeren Kanten des Faserbands zu viel des thermoplastischen Polymers aufgetragen wird. Grund dafür ist, dass die Breite des Benetzungsschlitzes größer sein muss als die Breite des Faserbands, damit eine ausreichende Benetzung der langen Kanten, d.h. der äußeren Ränder in Laufrichtung, des Faserbands stattfindet. Eine Verringerung der Breite des Benetzungsschlitzes führt aber dazu, dass die Benetzung des benetzten Faserbands entlang seiner langen Kanten unvollständig ist. Sowohl der Überschuss als auch der Mangel an Benetzung an den langen Kanten des benetzten Faserbands führen in der weiteren Verarbeitung zu einem imprägnierten Faserband, dass für die Weiterverwendung, beispielsweise für die Herstellung von Aufbauten aus mehreren flächig miteinander verbundenen imprägnierten Faserbändern, nicht brauchbar ist. Solche fehlerhaft benetzten Faserbänder führen zu imprägnierten Faserbänder, bei denen der Faservolumengehalt im Bereich der langen Kanten der imprägnierten Faserbänder zu hoch (bei unterschüssiger Benetzung und daraus folgend unterschüssiger Imprägnierung) oder zu niedrig (bei überschüssiger Benetzung und daraus folgend überschüssiger Imprägnierung) ist. Dies wiederum führt zu unerwünschten Abweichungen sowohl in den thermischen und mechanischen Eigenschaften im Bereich der langen Kanten der imprägnierten Faserbands gegenüber den außerhalb der langen Kanten der imprägnierten Faserbänder liegenden Bereichen der imprägnierten Faserbänder. So kann eine unterschüssige Benetzung dazu führen, dass die imprägnierten Faserbänder an den Rändern nicht ausreichend mechanisch stabil sind und zerfasern. Auch werden sowohl bei unterschüssiger als auch bei überschüssiger Benetzung die gewünschten Maße des Faserbands nicht eingehalten.

Da bei der Herstellung von mehrlagigen multidirektionalen Aufbauten sich die langen Kanten der imprägnierten Faserbänder nicht nur an den Ränder der Aufbauten, sondern auch innerhalb der Aufbauten befinden, kommt es zu unerwünschten Störungen des Gefüges solcher mehrlagiger Aufbauten, bis hin zu deren Unbrauchbarkeit. Daher müssen die nach dem Stand der Technik hergestellten imprägnierten Faserbänder entlang der langen Kanten beschnitten werden. Nur so ist es möglich, ein für die Weiterverwendung brauchbares imprägniertes Faserband zur Verfügung zu stellen. Dies stellt einen weiteren Arbeitsschritt dar, für den apparativer Aufwand getrieben werden muss, das Verfahren fehleranfälliger macht, und zusätzliche Arbeitszeit kostet.

Im Sinne der vorliegenden Erfindung bedeutet "Faservolumengehalt" der Quotient aus dem Volumen der Fasern in einem bestimmten Bereich des Faserbands und der Summe der Volumen des Thermoplasten und dem Volumen der Fasern, jeweils ohne die Volumina etwaiger Lufteinschlüsse.

Eine gute Benetzung ist umso schwieriger zu erreichen, je höher der Faservolumengehalt des imprägnierten Faserbands sein soll. Übliche Faservolumengehalte liegen im Bereich von 30 bis 70 %, bevorzugt im Bereich von bis 35 bis 60 %, besonders bevorzugt im Bereich von 40 bis 50 %.

Um Imprägnierung von 90 % zu erreichen, das heißt, dass in einem betrachteten Längenabschnitt wenigstens 90 % der Oberfläche aller Fasern mit dem jeweils eingesetzten Thermoplasten unmittelbar umgeben sind, darf die Abweichung vom gewünschten Faservolumengehalt pro Breitenabschnitt maximal 5 %, bevorzugt maximal 2 % betragen. Dazu muss das Faserband sehr gleichmäßig mit dem Thermoplast benetzt werden.

Ein Breitenabschnitt des Faserbands in Laufrichtung beträgt dabei 1 %, bevorzugt 0,5 %, besonders bevorzugt 0,2 %, ganz besonders bevorzugt 0,1 % der Gesamtbreite des Faserbands, mindestens jedoch 0,5 mm und maximal 5 mm.

Nachteilig beim Beschneiden des imprägnierten Faserbands ist aber auch der Verlust an Material, der insbesondere dann zu Buche schlägt, wenn teure Ausgangsmaterialien wie beispielsweise ein Polycarbonat als thermoplastische Matrix und Carbonfasern als Fasermaterial verwendet werden.

Die in der WO 2012 123 302 A1 offenbarte Vorrichtung hat als zweiten Nachteil, dass das Benetzen des Faserbands nur schwer eingestellt werden kann. Grund dafür sind zum einen die relativ hohen Viskositäten der eingesetzten Thermoplaste bei den bei der Imprägnierung herrschenden Temperaturen, zum anderen die durch Agglomeration der Fasern in sich inhomogenen Faserbänder. Die Viskositäten der eingesetzten Thermoplaste liegen dabei zwischen 10 und 300 Pa*s. Die Temperaturen bei der Benetzung können jedoch nicht beliebig erhöht werden, da dies zum einen zu einem erhöhten Energieverbrauch, zum anderen zu einer Zersetzung der Thermoplaste führte. Die mangelnde Einstellbarkeit der Benetzung des Faserbands hat zur Folge, dass das Faserband oftmals entweder zu wenig benetzt ist, das heißt, dass in einem betrachteten Längenabschnitt das gesamte Faserband nicht mindestens äußerlich von Thermoplast umgeben ist und die Abweichung vom gewünschten Faservolumengehalt pro Breitenabschnitt mehr als 2 %, sogar mehr als 5 %, oftmals mehr als 10 % beträgt. Mit einem derart mangelhaft benetztem Faserband ist es nicht möglich, ein imprägniertes Faserband herzustellen, bei dem wenigstens 90 % der Oberfläche aller Fasern eines imprägnierten Faserbands mit dem jeweils eingesetzten Thermoplasten imprägniert sind. Ein imprägniertes Faserband, bei dem nicht wenigstens 90 % der Oberfläche aller Fasern eines imprägnierten Faserbands mit dem jeweils eingesetzten Thermoplasten imprägniert sind, ist nicht zur Weiterverarbeitung geeignet und muss somit als Ausschuss entsorgt werden. Das bedeutet sowohl Kosten wegen des Materialverlusts als auch für die Entsorgung des unbrauchbaren Materials.

Jedoch kann zum anderen der Druck eines Thermoplasten auf das Faserband nicht beliebig erhöht werden, um ein Benetzung des Faserbands mit dem Thermoplasten zu befördern. Ein zu hoher Druck hat zur Folge, dass überschüssiger Thermoplast an den Seiten des Faserbands herausquillt, was wiederum zu erhöhten Kosten durch Materialverluste und einer verringerten Maßhaltigkeit sowohl des benetzten als auch des imprägnierten Faserbands führt.

Wie bereits erläutert schlagen die Kosten für Materialverluste insbesondere dann zu Buche, wenn teure Ausgangsmaterialien wie beispielsweise ein Polycarbonat als thermoplastische Matrix und Carbonfasern als Fasermaterial verwendet werden.

Polycarbonate haben neben dem hohen Preis gegenüber den üblicherweise eingesetzten thermoplastischen Kunststoffen den weiteren Nachteil, dass sie wenig Veranlagung zum Kriechen aufweisen und somit bei konstanter Spannung zu Rissbildung neigen. Dies ist besonders beim Einsatz in Verbundwerkstoffen, die Endlosfasern enthalten, höchst problematisch; denn Verbundwerkstoffe, die in ihrer Kunststoffmatrix Endlosfasern enthalten, stehen durch die Endlosfasern unter einer konstanten Spannung. Aus diesem Grund spielten Polycarbonate in der Praxis als Kunststoffmatrix für solche Endlosfasern enthaltenden Verbundwerkstoffe bisher nur eine untergeordnete Rolle.

Grundsätzlich ist es jedoch wünschenswert, das Einsatzgebiet von Polycarbonaten auch auf die imprägnierten Faserbänder auszuweiten, denn Polycarbonate weisen gegenüber den anderen üblichen thermoplastischen Kunststoffen, wie Polyamid oder Polypropylen, einen geringeren Volumenschwund beim Erstarren auf. Ferner weisen Polycarbonate im Vergleich zu anderen Thermoplasten eine höhere Glasübergangstemperatur Tg, eine höhere Wärmeformbeständigkeiten und eine geringere Wasseraufnahme auf.

Mit imprägnierten Faserbändern mit Polycarbonat als Matrixmaterial ist es darüber hinaus möglich, einen Mehrschichtverbundwerkstoff bereit zu stellen, der eine ästhetisch ansprechende Oberfläche mit geringer Welligkeit mit gleichzeitig guten mechanischen Eigenschaften aufweist. So ein aus imprägnierten Faserbändern mit Polycarbonat als Matrixmaterial aufgebauter Mehrschichtverbundwerkstoff weist eine metallähnliche Haptik, Optik und Akustik auf.

Mit diesen Eigenschaften ist ein solcher Mehrschichtverbundwerkstoff auch als Gehäusematerial für Gehäuse für elektronische Geräte, insbesondere portable elektronische Geräte wie Laptops oder Smartphones, für die Außenbeplankung sowie für Interieurblenden von Automobilen geeignet, da ein solcher Mehrschichtverbundwerkstoff sowohl mechanische Last aufnehmen kann als auch ein hervorragendes äußeres Erscheinungsbild bietet.

Um Polycarbonat der Herstellung von imprägnierten Faserbändern zugänglich zu machen, ist es daher auch eine besondere Sorgfalt beim Benetzen des Faserbands nötig, die im Stand der Technik nicht gewährleistet ist.

Aufgabe der vorliegenden Erfindung ist es, die Nachteile des Stands der Technik zu überwinden.

Insbesondere Aufgabe der vorliegenden Erfindung ist es, eine Vorrichtung zur Verfügung zu stellen, die dazu geeignet ist, ein nicht-benetztes Faserband derart zu benetzen, dass zum einen in einem betrachteten Längenabschnitt das gesamte Faserband mindestens äußerlich von Thermoplast umgeben ist, zum anderen die Abweichung vom gewünschten Faservolumengehalt pro Breitenabschnitt maximal 5 %, bevorzugt maximal 2 % beträgt.

Vorzugsweise soll außerdem die Menge des Überschusses an Thermoplasts, die nötig ist, um eine solche Benetzung herbeizuführen, maximal 5 %, bevorzugt maximal 3 %, besonders bevorzugt maximal 1 % der Menge an Thermoplast beträgt, die insgesamt für die Benetzung eines nicht-benetzten Faserbands verbraucht wird, also der Menge, die im imprägnierten Faserband haftet, vermehrt um die Menge des Überschusses. Dabei soll das aus dem benetzten Faserband hergestellte imprägnierte Faserband zur Erreichung des gewünschten Grads an Imprägnierung nicht beschnitten werden müssen.

Weiter vorzugsweise sind dabei wenigstens 90 %, besonders vorzugsweise wenigstens 95 % der Oberfläche aller Fasern eines aus dem erfindungsgemäß benetzten Faserband hergestellten imprägnierten Faserbands mit dem jeweils eingesetzten Thermoplasten imprägniert. Weiter vorzugsweise soll dabei der Grad der Imprägnierung in jedem Breitenabschnitt des imprägnierten Faserbands maximal um 10 %, bevorzugt maximal um 5 %, besonders bevorzugt maximal um 2 % vom durchschnittlichen Grad der Imprägnierung des imprägnierten Faserbands abweichen.

Eine solcher Grad an Imprägnierung ist - sofern das Faserband nach der Imprägnierung nicht entlang seiner langen Kanten beschnitten werden soll - nur über eine gute Benetzung des Faserbands mit dem eingesetzten Thermoplasten zu erreichen.

Auch ist es Aufgabe der vorliegenden Erfindung, eine Vorrichtung zur Verfügung zu stellen, mit der benetzte Faserbänder mit Polycarbonat als Matrixmaterial hergestellt werden können. Aus diesen benetzten Faserbändern können dann durch mindestens einen weiteren Verfahrensschritt, insbesondere einem oder mehreren Imprägnierschritten, imprägnierte Faserbänder hergestellt werden.

Diese aus den benetzten Faserbändern hergestellten imprägnierten Faserbänder mit Polycarbonat als Matrixmaterial sollen dazu geeignet sein, dass Mehrschichtverbundwerkstoffe mit einer metallähnliche Haptik, Optik, Akustik und einem hervorragenden äußeren Erscheinungsbild sowie der Fähigkeit, mechanische Last aufnehmen zu können, aus ihnen gefertigt werden können. Solche Mehrschichtverbundwerkstoffe sind dann als Gehäusematerial für Gehäuse für elektronische Geräte, insbesondere portable elektronische Geräte wie Laptops oder Smartphones, für die Außenbeplankung sowie für Interieurblenden von Automobilen geeignet.

Gelöst wird die Aufgabe durch die Vorrichtung gemäß vorliegendem Hauptanspruch. Die erfindungsgemäße Vorrichtung ist dadurch gekennzeichnet, dass sie eine Benetzungsdüse mit Benetzungstaschen zur Herstellung eines mit Thermoplast benetzten Faserbands aufweist.

Die Benetzungsdüse weist an beiden seitlichen Enden des Benetzungsschlitzes jeweils eine Benetzungstasche auf.

Dabei weist die Benetzungsdüse anschließend an aber getrennt von den beiden seitlichen Enden des Benetzungsschlitzes jeweils eine Benetzungstasche auf.

Eine solche Benetzungstasche schließt sich seitlich unmittelbar an den Benetzungsschlitz an und setzt sich in Vorschubrichtung des benetzten Faserbands fort, wobei der Benetzungstasche eine geringere Tiefe als der Benetzungsschlitz aufweist und nur über den Benetzungsschlitz mit der Zufuhr an Thermoplast verbunden ist. Die Benetzungstasche kann dabei beispielsweise in der Draufsicht halbkreisförmig, halbovalförmig, in Form eines Teilkreises mit einem Winkel A von 120° bis 135° mit angesetztem, in Vorschubrichtung spitz auslaufenden Dreieck oder in jeder anderen sinnvollen Form ausgebildet sein. Vorzugsweise ist die Benetzungstasche in der Draufsicht halbkreisförmig oder in Form eines Teilkreises mit einem Winkel A von 120° bis 135° mit angesetztem, in Vorschubrichtung spitz auslaufenden Dreieck ausgebildet, insbesondere in Form eines Teilkreises mit einem Winkel A von 120° bis 135° mit angesetztem, in Vorschubrichtung spitz auslaufenden Dreieck. Dabei geht der Schenkel des Dreiecks, der in Vorschubrichtung an die Kontur des Teilkreises anschließt, tangential aus dem Teilkreis hervor. Eine solch geformte Benetzungstasche ermöglicht es einerseits, genügend Matrixmaterial zur Benetzung vorzuhalten, insbesondere dort, wo das Matrixmaterial mit dem bisher nicht benetzten oder nur wenig benetzten Faserband in Berührung kommt, andererseits mit zunehmenden Grad der Benetzung immer weniger Matrixmaterial zur Verfügung zu stellen, um eine überschüssige Benetzung zu vermeiden. Durch das spitz auslaufende Ende des Dreiecks wird zudem eine scharfe Trennung zwischen dem nun benetzten Faserband und dem Matrixmaterial der Benetzungstasche bewirkt.

Die beiden Benetzungstaschen an den beiden seitlichen Enden des Benetzungsschlitzes sind vorzugsweise in Vorschubrichtung spiegelsymmetrisch zueinander angeordnet und ausgestaltet, jedoch ist es auch möglich, an den beiden seitlichen Enden des Benetzungsschlitzes Benetzungstaschen vorzusehen, die nicht spiegelsymmetrisch zueinander ausgeführt sind. Der Radius R einer Benetzungstasche ist der Viskosität des eingesetzten Thermoplasten angepasst. Vorzugsweise beträgt der Radius von 0,5 mm bis 2 mm, insbesondere etwa 1mm.

Erfindungsgemäß bevorzugt ist die Benetzungsdüse aus mehreren zueinander beweglichen Teilen aufgebaut. Auf diese Weise kann sowohl Weite des Schlitzes der Art und Zusammensetzung des Matrixmaterials und den Bedingungen zur Herstellung des imprägnierten Faserbands angepasst werden. Dabei hat der Schlitzes in der Regel eine Weite von 0,1 bis 1 mm.

Im Rahmen der vorliegenden Erfindung hat ein imprägniertes Faserband eine Matrix, die zu mindestens 50 Gew.-%, bevorzugt mindestens 70 Gew.-%, besonders bevorzugt zu mindestens 90 Gew.-%, aus einem oder mehreren Thermoplasten besteht. Dabei ist der Thermoplast bevorzugt ausgewählt aus ein oder mehreren der Reihe umfassend Polycarbonat, Polyamid, Polyethylen, Polypropylen, Polyphenylensulfon, Polyetherimid, einem Polyetherketon wie Polyetheretherketon, Polyetherketonketon, Polyetheretheretherketon, Polyetheretherketonketon, Poly(etherketon-etherketonketon), und thermoplastisches Polyurethan. Besonders bevorzugt ist der Thermoplast Polycarbonat.

Zusätzlich kann das Matrixmaterial bis zu 50,0 Gew.-%, bevorzugt bis zu 30 Gew.-%, besonders bevorzugt bis zu 10 Gew.-% übliche Additive enthalten.

Diese Gruppe umfasst Flammschutzmittel, Antitropfmittel, Thermostabilisatoren, Entformungsmittel, Antioxidantien, UV-Absorber, IR-Absorber, Antistatika, optische Aufheller, Lichtstreumittel, Farbmittel wie Pigmente, auch anorganischen Pigmente, Ruß und/oder Farbstoffe, und anorganische Füllstoffe in den für Polycarbonat üblichen Mengen. Diese Additive können einzeln oder auch im Gemisch zugesetzt werden.

Solche Additive, wie sie üblicherweise bei Polycarbonaten zugesetzt werden, sind beispielsweise in EP-A 0 839 623, WO-A 96/15102, EP-A 0 500 496 oder "Plastics Additives Handbook", Hans Zweifel, 5th Edition 2000, Hanser Verlag, München beschrieben.

Wenn von Polycarbonat die Rede ist, so sind damit auch Mischungen verschiedener Polycarbonate gemeint. Ferner wird Polycarbonat hier als Oberbegriff verwendet und umfasst damit sowohl Homopolycarbonate als auch Copolycarbonate. Die Polycarbonate können ferner in bekannter Weise linear oder verzweigt sein.

Bevorzugt besteht das Polycarbonat zu 70 Gew.-%, bevorzugt zu 80 Gew.-%, besonders bevorzugt zu 90 Gew.-% oder im Wesentlichen, insbesondere zu 100 Gew.-%, aus einem linearen Polycarbonat.

Die Herstellung der Polycarbonate kann in bekannter Weise aus Diphenolen, Kohlensäurederivaten, gegebenenfalls Kettenabbrechern und Verzweigern erfolgen. Einzelheiten der Herstellung von Polycarbonaten sind dem Fachmann seit mindestens etwa 40 Jahren gut bekannt. Beispielhaft sei hier auf Schnell, Chemistry and Physics of Polycarbonates, Polymer Reviews, Volume 9, Interscience Publishers, New York, London, Sydney 1964, auf D. Freitag, U. Grigo, P.R. Müller, H. Nouvertne, BAYER AG, Polycarbonates in Encyclopedia of Polymer Science and Engineering, Volume 11, Second Edition, 1988, Seiten 648-718 und schließlich auf U. Grigo, K. Kirchner und P.R. Müller Polycarbonate in BeckerBraun, Kunststoff-Handbuch, Band 31, Polycarbonate, Polyacetale, Polyester, Celluloseester, Carl Hanser Verlag München, Wien 1992, Seiten 117-299 verwiesen.

Die Herstellung aromatischer Polycarbonate erfolgt z.B. durch Umsetzung von Diphenolen mit Kohlensäurehalogeniden, vorzugsweise Phosgen, und oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern und gegebenenfalls unter Verwendung von trifunktionellen oder mehr als trifunktionellen Verzweigern. Ebenso ist eine Herstellung über ein Schmelzepolymerisationsverfahren durch Umsetzung von Diphenolen mit beispielsweise Diphenylcarbonat möglich. Für die Herstellung der Polycarbonate geeignete Diphenole sind beispielsweise Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α-α'-Bis-(hydroxyphenyl)-diisopropylbenzole, Phtalimidine abgeleitet von Isatin- oder Phenolphthaleinderivaten sowie deren kernalkylierte, kernarylierte und kernhalogenierte Verbindungen.

Vorzugsweise werden bei den Diphenolen auf der Basis von Phthalimiden, wie beispielsweise 2-Aralkyl-3,3'-Bis-(4-hydroxyphenyl)-phthalimide oder 2-Aryl-3,3'-Bis-(4-hydroxyphenyl)-phthalimide wie 2-Phenyl-3,3'-Bis-(4-hydroxyphenyl)-phthalimid, 2-Alkyl-3,3'-Bis-(4-hydroxyphenyl)-phthalimide, wie 2-Butyl-3,3'-Bis-(4-hydroxyphenyl)-phthalimide, 2-Propyl-3,3'-Bis-(4-hydroxyphenyl)-phthalimide, 2-Ethyl-3,3'-Bis-(4-hydroxyphenyl)-phthalimide oder 2-Methyl-3,3'-Bis-(4-hydroxyphenyl)-phthallmide sowie Diphenolen auf der Basis von am Stickstoff substituierten Isatinen wie 3,3-Bis(4-hydroxyphenyl)-1-phenyl-1H-indol-2-on oder 2,2-Bis(4-hydroxyphenyl)-1-phenyl-1H-indol-3-on eingesetzt.

Bevorzugte Diphenole sind 4,4'-Dihydroxydiphenyl, 2,2-Bis-(4-hydroxyphenyl)-propan (Bisphenol A), 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, Dimethyl-Bisphenol A, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol und 1,1-Bis-(4-hydroxyphenyl)-3,3,5-trimethylcyclohexan.

Besonders bevorzugte Diphenole sind 2,2-Bis-(4-hydroxyphenyl)-propan (Bisphenol A), 2,2-Bis-(3,5-dimethyl-4-hydroxyphenyl)-propan, 1,1-Bis-(4-hydroxyphenyl)-cyclohexan, 1,1-Bis-(4-hydroxyphenyl)-3,3,5-trimethylcyclohexan und Dimethyl-Bisphenol A.

Diese und weitere geeignete Diphenole sind z.B. in US-A 3 028 635, US-A 2 999 825, US-A 3 148 172, US-A 2 991 273, US-A 3 271 367, US-A 4 982 014 und US-A 2 999 846, in DE-A 1 570 703, DE-A 2063 050, DE-A 2 036 052, DE-A 2 211 956 und DE-A 3 832 396, in FR-A 1 561 518, in der Monographie H. Schnell, Chemistry and Physics of Polycarbonates, Interscience Publishers, New York 1964 sowie in JP-A 620391986, JP-A 620401986 und JP-A 1055501986 beschrieben.

Im Fall der Homopolycarbonate wird nur ein Diphenol eingesetzt, im Fall der Copolycarbonate werden mehrere Diphenole eingesetzt.

Geeignete Kohlensäurederivate sind beispielsweise Phosgen oder Diphenylcarbonat. Geeignete Kettenabbrecher, die bei der Herstellung der Polycarbonate eingesetzt werden können, sind Monophenole. Geeignete Monophenole sind beispielsweise Phenol selbst, Alkylphenole wie Kresole, p-tert.-Butylphenol, Cumylphenol, sowie deren Mischungen.

Bevorzugte Kettenabbrecher sind die Phenole, welche ein- oder mehrfach mit C1- bis C30-Alkylresten, linear oder verzweigt, bevorzugt unsubstituiert, oder mit tert-Butyl substituiert sind. Besonders bevorzugte Kettenabbrecher sind Phenol, Cumylphenol undoder p-tert-Butylphenol. Die Menge an einzusetzendem Kettenabbrecher beträgt bevorzugt 0,1 bis 5 Mol-%, bezogen auf Mole an jeweils eingesetzten Diphenolen. Die Zugabe der Kettenabbrecher kann vor, während oder nach der Umsetzung mit einem Kohlensäurederivat erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise 1,3,5-Tri-(4-hydroxyphenyl)-benzol, 1,1,1-Tri-(4-hydroxyphenyl)-ethan, Tri-(4-hydroxyphenyl)-phenylmethan, 2,4-Bis-(4-hydroxyphenylisopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Tetra-(4-hydroxyphenyl)-methan, Tetra-(4-(4-hydroxyphenylisopropyl)-phenoxy)-methan und 1,4-Bis-((4',4-dihydroxytriphenyl)-methyl)-benzol und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 3,00 Mol-%, bezogen auf Mole an jeweils eingesetzten Diphenolen. Die Verzweiger können entweder mit den Diphenolen und den Kettenabbrechern in der wässrig alkalischen Phase vorgelegt werden oder in einem organischen Lösungsmittel gelöst vor der Phosgenierung zugegeben werden. Im Fall des Umesterungsverfahrens werden die Verzweiger zusammen mit den Diphenolen eingesetzt.

Besonders bevorzugte Polycarbonate sind das Homopolycarbonat auf Basis von Bisphenol A, das Homopolycarbonat auf Basis von 1,3-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan.

Des Weiteren können auch Copolycarbonate Verwendung finden. Zur Herstellung dieser Copolycarbonate können 1 Gew.-% bis 25 Gew.-%, vorzugsweise 2,5 Gew.-% bis 25 Gew.-%, besonders bevorzugt 2,5 Gew.-% bis 10 Gew.-%, bezogen auf die Gesamtmenge an einzusetzenden Diphenolen, Polydiorganosiloxane mit Hydroxyaryloxy-Endgruppen eingesetzt werden. Diese sind bekannt (US 3 419 634, US-PS 3 189 662, EP 0 122 535, US 5 227 449) und nach literaturbekannten Verfahren herstellbar. Ebenfalls geeignet sind Polydiorganosiloxanhaltige Copolycarbonate; die Herstellung der Polydiorganosiloxanhaltiger Copolycarbonate ist beispielsweise in der DE-A 3 334 782 beschrieben.

Die Polycarbonate können alleine oder als Mischung von Polycarbonaten vorliegen. Es ist auch möglich das Polycarbonat oder die Mischung von Polycarbonaten gemeinsam mit einem oder mehreren von Polycarbonat verschiedenen Kunststoffen als Blendpartner einzusetzen.

Als Blendpartner lassen sich Polyamide, Polyester, insbesondere Polybutylenterephthalat und Polyethylenterephthalat, Polylactid, Polyether, thermoplastisches Polyurethan, Polyacetal, Fluorpolymer, insbesondere Polyvinylidenfluorid, Polyethersulfone, Polyolefin, insbesondere Polyethylen und Polypropylen, Polyimid, Polyacrylat, insbesondere Poly(methyl)methacrylat, Polyphenylenoxid, Polyphenylensulfid, Polyetherketon, Polyaryletherketon, Styrolpolymerisate, insbesondere Polystyrol, Styrolcopolymere, insbesondere Styrolacrylnitrilcopolymer, Acrylnitrilbutadienstyrolblockcopolymere und Polyvinylchlorid einsetzen.

Erfindungsgemäß geeignete Polyamide sind ebenfalls bekannt oder nach literaturbekannten Verfahren herstellbar.

Erfindungsgemäß geeignete Polyamide sind bekannte Homopolyamide, Copolyamide und Mischungen dieser Polyamide. Es können dies teilkristalline und/oder amorphe Polyamide sein. Als teilkristalline Polyamide sind Polyamid-6, Polyamid-6,6, Mischungen und entsprechende Copolymerisate aus diesen Komponenten geeignet. Weiterhin kommen teilkristalline Polyamide in Betracht, deren Säurekomponente ganz oder teilweise aus Terephthalsäure und/oder Isophthalsäure und/oder Korksäure und/oder Sebacinsäure und/oder Azelainsäure und/oder Adipinsäure und/oder Cyclohexandicarbonsäure, deren Diaminkomponente ganz oder teilweise aus m- und/oder p-Xylylendiamin und/oder Hexamethylendiamin und/oder 2,2,4-Trimethylhexamethylendiamin und/oder 2,4,4-Trimethylhexamethylendiamin und/oder Isophorondiamin besteht und deren Zusammensetzung prinzipiell bekannt ist.

Außerdem sind Polyamide zu nennen, die ganz oder teilweise aus Lactamen mit 7 bis 12 Kohlenstoffatomen im Ring, gegebenenfalls unter Mitverwendung einer oder mehrerer der oben genannten Ausgangskomponenten, hergestellt werden.

Besonders bevorzugte teilkristalline Polyamide sind Polyamid-6 und Polyamid-6,6 und ihre Mischungen. Als amorphe Polyamide können bekannte Produkte eingesetzt werden. Sie werden erhalten durch Polykondensation von Diaminen wie Ethylendiamin, Hexamethylendiamin, Decamethylendiamin, 2,2,4- und/oder 2,4,4-Trimethyl-hexamethylendiamin, m- und/oder p-Xylylendiamin, Bis-(4-aminocyclohexyl)-methan, Bis-(4-aminocyclohexyl)-propan, 3,3'-Dimethyl-4,4'-diamino-dicyclohexyl-methan, 3-Aminomethyl-3,5,5-trimethylcyclohexylamin, 2,5-und/oder 2,6-Bis-(aminomethyl)-norbornan und/oder 1,4-Diaminomethylcyclohexan mit Dicarbonsäuren wie Oxalsäure, Adipinsäure, Azelainsäure, Decandicarbonsäure, Heptadecandicarbonsäure, 2,2,4- und/oder 2,4,4-Trimethyladipinsäure, Isophthalsäure und Terephthalsäure.

Auch Copolymere, die durch Polykondensation mehrerer Monomere erhalten wer-den, sind geeignet, ferner Copolymere, die unter Zusatz von Aminocarbonsäuren wie e-Aminocapronsäure, w-Aminoundecansäure oder w-Aminolaurinsäure oder ihren Lactamen, hergestellt werden.

Besonders geeignete amorphe Polyamide sind die Polyamide hergestellt aus Isoph-thalsäure, Hexamethylendiamin und weiteren Diaminen wie 4,4-Diaminodicyclo-hexylmethan, Isophorondiamin, 2,2,4- und/oder 2,4,4-Trimethylhexa-methylendi-amin, 2,5- und/oder 2,6-Bis-(aminomethyl)-norbornen; oder aus Isophthalsäure, 4,4'-Diamino-dicyclohexylmethan und ε-Caprolactam; oder aus Isophthalsäure, 3,3'-Di-methyl-4,4'-diamino-dicyclohexylmethan und Laurinlactam; oder aus Terephthalsäure und dem Isomerengemisch aus 2,2,4- und/oder 2,4,4-Trimethylhexamethylendiamin.

Anstelle des reinen 4,4'-Diaminodicyclohexylmethans können auch Gemische der Stellungsisomeren Diamindicyclohexalmethane eingesetzt werden, die sich zusammensetzen aus
70 bis 99 mol-% des 4,4'-Diamino-Isomeren,
1 bis 30 mol-% des 2,4'-Diamino-Isomeren und
0 bis 2 mol-% des 2,2'-Diamino-Isomeren,
gegebenenfalls entsprechend höher kondensierten Diaminen, die durch Hydrierung von Diaminodiphenylmethan technischer Qualität erhalten werden. Die Isophthalsäure kann bis zu 30 % durch Terephthalsäure ersetzt sein.

Die Polyamide weisen vorzugsweise eine relative Viskosität (gemessen an einer 1 gew.-%igen Lösung in m-Kresol bei 25°C) von 2,0 bis 5,0, besonders bevorzugt von 2,5 bis 4,0 auf.

Erfindungsgemäß geeignete thermoplastische Polyurethane sind ebenfalls bekannt oder nach literaturbekannten Verfahren herstellbar.

Eine Übersicht über die Herstellung, Eigenschaften und Anwendungen von thermoplastischem Polyurethanen (TPU) ist z.B. im Kunststoff Handbuch [G. Becker, D. Braun], Band 7 "Polyurethane", München, Wien, Carl Hanser Verlag, 1983, gegeben.

TPU werden zumeist aus linearen Polyolen (Makrodiolen), wie Polyester-, Polyether- oder Polycarbonatdiolen, organischen Diisocyanaten und kurzkettigen, zumeist difunktionellen Alkoholen (Kettenverlängerern) aufgebaut. Sie können kontinuierlich oder diskontinuierlich hergestellt werden. Die bekanntesten Herstellverfahren sind das Bandverfahren (GB-A 1 057 018) und das Extruderverfahren (DE-A 19 64 834).

Die eingesetzten thermoplastischen Polyurethane sind Reaktionsprodukte aus
I) organischen Diisocyanaten
II) Polyolen
III) Kettenverlängerern.

Als Diisocyanate (I) können aromatische, aliphatische, araliphatische, heterocyclische und cycloaliphatische Diisocyanate oder Gemische dieser Diisocyanate verwendet werden (vgl. HOUBEN-WEYL "Methoden der organischen Chemie", Band E20 "Makromolekulare Stoffe", Georg Thieme Verlag, Stuttgart, New York 1987, S. 1587-1593 oder Justus Liebigs Annalen der Chemie, 562, Seiten 75 bis 136).

Im Einzelnen seien beispielhaft genannt: aliphatische Diisocyanate, wie Hexamethylendi-isocyanat, cycloaliphatische Diisocyanate, wie Isophorondiisocyanat, 1,4-Cyclohexan-diisocyanat, 1-Methyl-2,4-cyclohexan-diisocyanat und 1-Methyl-2,6-cyclohexan-diisocyanat sowie die entsprechenden Isomerengemische, 4,4'-Dicyclohexylmethan-diisocyanat, 2,4'-Dicyclohexylmethan-diisocyanat und 2,2'-Dicyclohexylmethan-diisocyanat sowie die entspre-chenden Isomerengemische, aromatische Diisocyanate, wie 2,4-Toluylendiisocyanat, Gemische aus 2,4-Toluylendiisocyanat und 2,6-Toluylendiisocyanat, 4,4'-Diphenylmethan-diisocyanat, 2,4'-Diphenylmethandiisocyanat und 2,2'-Diphenylmethandiisocyanat, Gemische aus 2,4'-Diphenylmethandiisocyanat und 4,4'-Diphenylmethandiisocyanat, urethanmodifizierte flüssige 4,4'-Diphenylmethandiisocyanate und 2,4'-Diphenylmethandiiso-cyanate, 4,4'-Diisocyanatodiphenyl-ethan-(1,2) und 1,5-Naphthylendiisocyanat. Vorzugsweise verwendet werden 1,6-Hexamethylendiisocyanat, Isophorondiisocyanat, Dicyclohexyl-methandiisocyanat, Diphenylmethandiisocyanat-Isomerengemische mit einem 4,4'-Diphenyl-methandiisocyanatgehalt von >96 Gew.-% und insbesondere 4,4'-Diphenylmethandiisocyanat und 1,5-Naphthylendiisocyanat. Die genannten Diisocyanate können einzeln oder in Form von Mischungen untereinander zur Anwendung kommen. Sie können auch zusammen mit bis zu 15 Gew.-% (berechnet auf die Gesamtmenge an Diisocyanat) eines Polyisocyanates verwendet werden, beispielsweise Triphenylmethan-4,4',4"-triisocyanat oder Polyphenyl-poly-methylen-polyisocyanaten.

Zerewitinoff-aktive Polyole (II) sind solche mit im Mittel mindestens 1,8 bis höchstens 3,0 zerewitinoff-aktiven Wasserstoffatomen und einem zahlenmittleren Molekulargewicht M̅ₙ von 500 bis 10000 g/mol, vorzugsweise 500 bis 6000 g/mol.

Eingeschlossen sind neben Aminogruppen, Thiolgruppen oder Carboxylgruppen aufweisenden Verbindungen insbesondere zwei bis drei, bevorzugt zwei Hydroxylgruppen aufweisende Verbindungen, speziell solche mit zahlenmittleren Molekulargewichten M̅ₙ von 500 bis 10000 g/mol, besonders bevorzugt solche mit einem zahlenmittleren Molekulargewicht M̅ₙ von 500 bis 6000 g/mol; z.B. Hydroxylgruppen aufweisende Polyester, Polyether, Polycarbonate und Polyesteramide oder Gemische aus diesen.

Geeignete Polyether-Diole können dadurch hergestellt werden, dass man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2-Butylenoxid und 2,3-Butylenoxid. Vorzugsweise Anwendung finden Ethylenoxid, Propylenoxid und Mischungen aus 1,2-Propylenoxid und Ethylenoxid. Die Alkylenoxide können einzeln, alternierend nacheinander oder als Mischungen verwendet werden. Als Startermoleküle kommen beispielsweise in Betracht: Wasser, Aminoalkohole, wie N-Alkyl-diethanolamine, beispielsweise N-Methyl-diethanolamin und Diole wie Ethylenglykol, 1,3-Propylenglykol, 1,4-Butandiol und 1,6-Hexandiol. Gegebenenfalls können auch Mischungen von Startermolekülen eingesetzt werden. Geeignete Polyetherole sind ferner die hydroxylgruppenhaltigen Poly-merisationsprodukte des Tetrahydrofurans. Es können auch trifunktionelle Polyether in Anteilen von 0 bis 30 Gew.-% bezogen auf die bifunktionellen Polyether eingesetzt werden, jedoch höchstens in solcher Menge, dass ein noch thermoplastisch verarbeitbares Produkt entsteht. Die im Wesentlichen linearen Polyether-Diole besitzen vorzugsweise zahlenmittlere Molekulargewichte M̅ₙ von 500 bis 10000 g/mol, besonders bevorzugt 500 bis 6000 g/mol. Sie können sowohl einzeln als auch in Form von Mischungen untereinander zur Anwendung kommen.

Geeignete Polyester-Diole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren wie Bernsteinsäure, Glutarsäure, Adipinsäure, Korksäure, Azelainsäure und Sebacinsäure, oder aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyester-Diole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, z.B. Ethylenglykol, Diethylenglykol, 1,4-Butandiol, 1,5-Pentandiol, 1,6 Hexandiol, 1,10-Decandiol, 2,2-Dimethyl-1,3-propandiol, 1,3-Propandiol oder Di-propylenglykol. Je nach den gewünschten Eigenschaften können die mehrwertigen Alkohole allein oder in Mischung untereinander verwendet werden. Geeignet sind ferner Ester der Koh-lensäure mit den genannten Diolen, insbesondere solchen mit 4 bis 6 Kohlenstoffatomen, wie 1,4-Butandiol oder 1,6-Hexandiol, Kondensationsprodukte von ω-Hydroxycarbonsäuren wie ω-Hydroxycapronsäure oder Polymerisationsprodukte von Lactonen, z.B. gegebenenfalls substituierten ω-Caprolactonen. Als Polyester-Diole vorzugsweise verwendet werden Ethandiol-polyadipate, 1,4-Butandiolpolyadipate, Ethandiol-1,4-butandiolpolyadipate, 1,6-Hexandiol-neopentylglykolpolyadipate, 1,6-Hexandiol-1,4-butandiolpolyadipate und Polycaprolactone. Die Polyester-Diole besitzen zahlenmittleren Molekulargewichte M̅ₙ von 500 bis 10000 g/mol, besonders bevorzugt 600 bis 6000 g/mol und können einzeln oder in Form von Mischungen untereinander zur Anwendung kommen.

Zerewitinoff-aktive Polyole (III) sind sogenannte Kettenverlängerungsmittel und besitzen im Mittel 1,8 bis 3,0 zerewitinoff-aktive Wasserstoffatome und haben ein zahlenmittleres Molekulargewicht M̅ₙ von 60 bis 500 g/mol. Hierunter versteht man neben Aminogruppen, Thiolgruppen oder Carboxylgruppen aufweisenden Verbindungen solche mit zwei bis drei, bevorzugt zwei Hydroxylgruppen.

Als Kettenverlängerungsmittel werden Diole oder Diamine mit einem Molekulargewicht von 60 bis 495 g/mol eingesetzt, vorzugsweise aliphatische Diole mit 2 bis 14 Kohlenstoffatomen eingesetzt, wie z.B. Ethandiol, 1,2-Propandiol, 1,3-Propandiol, 1,4-Butandiol, 2,3-Butandiol, 1,5-Pentandiol, 1,6-Hexandiol, Diethylenglykol und Dipropylenglykol. Geeignet sind jedoch auch Diester der Terephthalsäure mit Glykolen mit 2 bis 4 Kohlenstoffatomen, z.B. Terephthalsäure-bisethylenglykol oder Terephthalsäure-bis-1,4-butandiol, Hydroxy-alkylenether des Hydrochinons, z.B. 1,4-Di(β-hydroxyethyl)-hydrochinon, ethoxylierte Bisphenole, z.B. 1,4-Di(β-hydroxyethyl)-bisphenol A, (cyclo)aliphatische Diamine, wie Iso-phorondiamin, Ethylendiamin, 1,2-Propylendiamin, 1,3-Propylendiamin, N Methyl-propylen-1,3-diamin, N,N'-Dimethylethylendiamin und aromatische Diamine, wie 2,4-Toluylendiamin, 2,6-Toluylendiamin, 3,5-Diethyl-2,4 toluylendiamin oder 3,5 Diethyl-2,6-toluylendiamin oder primäre mono-, di-, tri-oder tetraalkylsubstituierte 4,4'-Diaminodiphenylmethane. Besonders bevorzugt werden als Kettenverlängerer Ethandiol, 1,4-Butandiol, 1,6-Hexandiol, 1,4-Di(β-hydroxyethyl)-hydrochinon oder 1,4 Di(β -hydroxyethyl)-bisphenol A verwendet. Es können auch Gemische der oben genannten Kettenverlängerer eingesetzt werden. Daneben können auch kleinere Mengen an Triolen zugesetzt werden.

Gegenüber Isocyanaten monofunktionelle Verbindungen können in Anteilen bis zu 2 Gew.-%, bezogen auf thermoplastisches Polyurethan, als sogenannte Kettenabbrecher oder Entformungshilfen eingesetzt werden. Geeignet sind z.B. Monoamine wie Butyl- und Dibutylamin, Octylamin, Stearylamin, N-Methylstearylamin, Pyrrolidin, Piperidin oder Cyclohexylamin, Monoalkohole wie Butanol, 2-Ethylhexanol, Octanol, Dodecanol, Stearylalkohol, die verschiedenen Amylalkohole, Cyclohexanol und Ethylen-glykolmonomethylether.

Die relativen Mengen der Verbindungen (II) und (III) werden bevorzugt so gewählt, dass das Verhältnis der Summe der Isocyanatgruppen in (I) zu der Summe der zerewitinoffaktiven Wasserstoffatome in (II) und (III) 0,85:1 bis 1,2:1 beträgt, bevorzugt 0,95:1 bis 1,1:1.

Die erfindungsgemäß eingesetzten, thermoplastischen Polyurethanelastomere (TPU) können als Hilfs- und Zusatzstoffe bis zu maximal 20 Gew.-%, bezogen auf die Gesamtmenge an TPU, der üblichen Hilfs- und Zusatzstoffe enthalten. Typische Hilfs- und Zusatzstoffe sind Katalysatoren, Pigmente, Farbstoffe, Flammschutzmittel, Stabilisatoren gegen Alterungs- und Witterungseinflüsse, Weichmacher, Gleit- und Entformungsmittel, fungistatisch und bakteriostatisch wirkende Substanzen sowie Füllstoffe und deren Mischungen.

Geeignete Katalysatoren sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylamino-ethoxy)ethanol, Diazabicyclo[2,2,2]octan und ähnliche sowie insbesondere organische Metallverbindungen wie Titansäureester, Eisenverbindungen oder Zinnverbindungen wie Zinndiacetat, Zinndioctoat, Zinndilaurat oder die Zinndialkyl-salze aliphatischer Carbonsäuren wie Dibutylzinndiacetat oder Dibutylzinndilaurat oder ähnliche. Bevorzugte Katalysatoren sind organische Metallverbindungen, insbesondere Titansäureester, Eisen- und Zinnverbindungen. Die Gesamtmenge an Katalysatoren in den TPU beträgt in der Regel etwa 0 bis 5 Gew.-%, bevorzugt 0 bis 2 Gew.-%, bezogen auf die Gesamtmenge an TPU.

Beispiele für weitere Zusatzstoffe sind Gleitmittel, wie Fettsäureester, deren Metallseifen, Fettsäureamide, Fettsäureesteramide und Siliconverbindungen, Antiblockmittel, Inhibitoren, Stabilisatoren gegen Hydrolyse, Licht, Hitze und Verfärbung, Flammschutzmittel, Farbstoffe, Pigmente, anorganische und/oder organische Füllstoffe und Verstärkungsmittel. Verstärkungsmittel sind insbesondere faserartige Verstärkungsstoffe wie z.B. anorganische Fasern, die nach dem Stand der Technik hergestellt werden und auch mit einer Schlichte beaufschlagt sein können. Nähere Angaben über die genannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964, dem Taschenbuch für Kunststoff-Additive von R. Gächter u. H. Müller (Hanser Verlag München 1990) oder der DE-A 29 01 774 zu entnehmen.

Weitere Zusätze, die in das TPU eingearbeitet werden können, sind Thermoplaste, beispielsweise Polycarbonate und Acrylnitril/Butadien/Styrol-Terpolymere, insbesondere ABS. Auch andere Elastomere wie Kautschuk, Ethylen/Vinylacetatcopolymere, Styrol/Butadiencopolymere sowie andere TPU können verwendet werden.

Weiterhin zur Einarbeitung geeignet sind handelsübliche Weichmacher wie Phosphate, Phthalate, Adipate, Sebacate und Alkylsulfonsäureester.

Erfindungsgemäß geeignetes Polyethylen ist ebenfalls bekannt oder nach literaturbekannten Verfahren herstellbar. Bei dem Polyethylen kann es sich sowohl um PE-HD (HDPE), PE-LD (LDPE), PE-LLD (LLDPE), PE-HMW, als auch um PE-UHMW handeln.

Auch das erfindungsgemäß geeignete Polypropylen, Polyphenylensulfon, Polyetherimid, und Polyetherketon ist ebenfalls bekannt oder nach literaturbekannten Verfahren herstellbar.

Allgemein kann es sinnvoll sein, dem Thermoplasten, der für die Matrix verwendet wird, Thermostabilisatoren und Fließverbesserer zuzusetzen.

Als Fasern werden erfindungsgemäß insbesondere Naturfasern oder künstlich hergestellte Fasern oder eine Mischung aus beiden eingesetzt. Dabei sind die Naturfasern vorzugsweise faserförmige Minerale oder pflanzliche Fasern und die künstlich hergestellten Fasern vorzugsweise anorganische Synthesefasern oder organische Synthesefasern. Erfindungsgemäß bevorzugt sind Glas-, Carbon-, oder Polymerfasern, wiederum bevorzugt Glas- oder Carbonfasern.

Ganz besonders bevorzugt sind Glasfasern, insbesondere mit einem E-Modul von größer 50 GPa, bevorzugt größer 70 GPa, oder Carbonfasern, insbesondere mit einem E-Modul von größer 200 GPa, bevorzugt größer 230 GPa, einzusetzen. Insbesondere sind Carbonfasern mit diesen Eigenschaften bevorzugt. Solche Carbonfasern sind beispielsweise unter der Bezeichnung Pyrofil von der Firma Mitsubishi Rayon CO., LtD. im Handel erhältlich.

Der Faservolumengehalt im benetzten Faserband beträgt von 30 bis 70 %, bevorzugt von 35 bis 60 % besonders bevorzugt von 40 bis 50 Vol.-%

Das erfindungsgemäß benetzte Faserband zeichnet sich dadurch aus, dass es zum einen in einem betrachteten Längenabschnitt mindestens äußerlich von Thermoplast umgeben ist, zum anderen die Abweichung vom gewünschten Faservolumengehalt pro Breitenabschnitt maximal 5 %, bevorzugt maximal 2 % beträgt.

Dabei beträgt Menge des Überschusses an Thermoplasts, die nötig ist, um eine solche Benetzung herbeizuführen, maximal 5 %, bevorzugt maximal 3 %, besonders bevorzugt maximal 1 % der Menge an Thermoplast, die insgesamt für die Benetzung eines nicht-benetzten Faserbands verbraucht wird, also der Menge, die im imprägnierten Faserband haftet, vermehrt um die Menge des Überschusses. Dadurch ist es nicht nötig, das aus dem benetzten Faserband hergestellte imprägnierte Faserband zur Erreichung des gewünschten Grads an Imprägnierung zu beschneiden.

Als Material für die Benetzungsdüse sind insbesondere vergütete Werkzeugstähle geeignet, die sich gut spanend bearbeiten lassen, beispielsweise die Stähle 1.2311 oder 1.2312.

Das erfindungsgemäße Verfahren entspricht dem in der WO 2012 123 302 A1 beschriebenen Verfahren, insbesondere dem von Seite 1, Zeile 26, bis Seite 2, Zeile 22, beschriebenen Verfahren, wobei beim erfindungsgemäßen Verfahren die erfindungsgemäße Benetzungsdüse verwendet wird.

Aus dem benetzten Faserband kann das imprägnierte Faserband beispielsweise durch Druckbeaufschlagung erhalten werden, wiederum beispielsweise durch Umlenkung des Faserbands auf einer Rolle. Vorzugsweise kann das imprägnierte Faserband durch Druck-Scher-Vibrationsbeaufschlagung gemäß dem in der WO 2012 123 302 A1 beschriebenen Verfahren, insbesondere in dem von Seite 11, Zeile 23, bis Seite 21, Zeile 2, und den zugehörigen Figuren beschriebenen Verfahren, erhalten werden.

Weiterer Gegenstand der vorliegenden Erfindung ist auch ein imprägniertes Faserband, dass mit der erfindungsgemäßen Vorrichtung oder dem erfindungsgemäßen Verfahren hergestellt werden kann.

Ein typisches imprägniertes Faserband hat in der Regel in Laufrichtung eine Länge von 100 bis zu 3000 m, eine Breite von 60 bis 2100 mm, bevorzugt von 500 bis 1000 mm, besonders bevorzugt von 600 bis 800 mm, und eine Dicke von 100 bis 350 µm, bevorzugt von 120 bis 200 µm. Jedoch kann auf der erfindungsgemäßen Vorrichtung auch ein anders dimensioniertes imprägniertes Faserband verarbeitet werden.

Das erfindungsgemäße imprägnierte Faserband zeichnet sich dadurch aus, dass wenigstens 90 %, besonders vorzugsweise wenigstens 95 % der Oberfläche aller Fasern eines imprägnierten Faserbands mit dem jeweils eingesetzten Thermoplasten imprägniert sind. Weiter vorzugsweise soll dabei der Grad der Imprägnierung in jedem Breitenabschnitt des imprägnierten Faserbands maximal um 10 %, bevorzugt maximal um 5 %, besonders bevorzugt maximal um 2 % vom durchschnittlichen Grad der Imprägnierung des imprägnierten Faserbands abweichen.

Ein solches erfindungsgemäßes imprägniertes Faserband ist besonders gut dazu geeignet, einen Mehrschichtverbundwerkstoff bereit zu stellen, der eine ästhetisch ansprechende Oberfläche mit geringer Welligkeit mit gleichzeitig guten mechanischen Eigenschaften aufweist. So ein aus imprägnierten Faserbändern mit Polycarbonat als Matrixmaterial aufgebauter Mehrschichtverbundwerkstoff weist eine metallähnliche Haptik, Optik und Akustik auf.

Mit diesen Eigenschaften ist ein solcher Mehrschichtverbundwerkstoff auch als Gehäusematerial für Gehäuse für elektronische Geräte, insbesondere portable elektronische Geräte wie Laptops oder Smartphones, für die Außenbeplankung sowie für Interieurblenden von Automobilen geeignet, da ein solcher Mehrschichtverbundwerkstoff sowohl mechanische Last aufnehmen kann als auch ein hervorragendes äußeres Erscheinungsbild bietet.

Weiterer Gegenstand der Erfindung ist daher auch ein aus dem erfindungsgemäßen imprägnierten Faserband hergestellter Mehrschichtverbundwerkstoff.

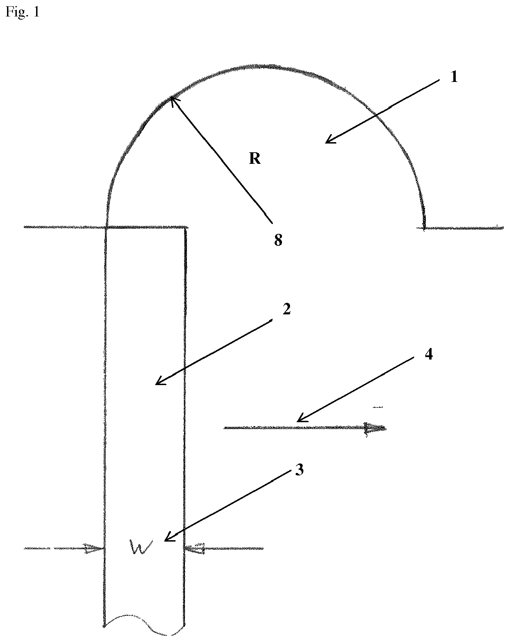

Fig. 1 zeigt in vereinfachter Form einen Ausschnitt der erfindungsgemäße Imprägnierdüse mit einer halbkreisförmigen Benetzungstasche, ohne dass die Erfindung auf die dargestellte Ausführungsform eingeschränkt werden soll.

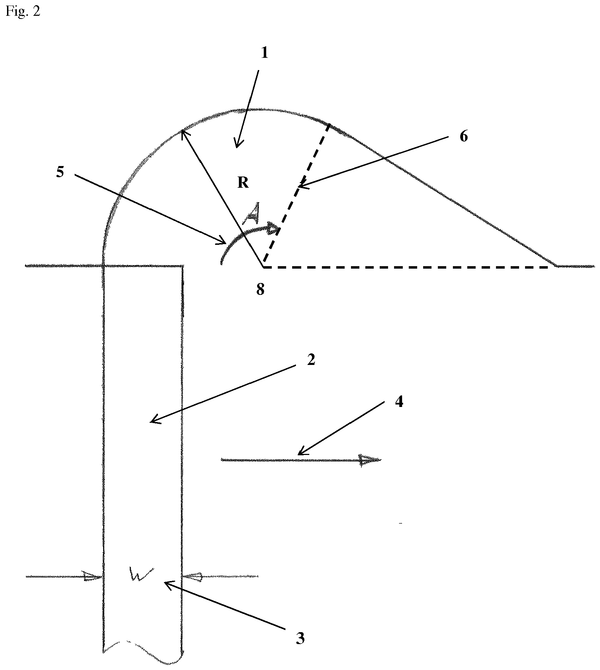

Fig. 2 zeigt in vereinfachter Form einen Ausschnitt der erfindungsgemäße Imprägnierdüse mit einer Benetzungstasche in Form eines 120°-Teilkreises mit angesetztem, in Vorschubrichtung spitz auslaufenden Dreieck, ohne dass die Erfindung auf die dargestellte Ausführungsform eingeschränkt werden soll.

Dabei sind:
- 1: Benetzungstasche
- 2: Benetzungsschlitz
- 3: Weite w des Benetzungsschlitzes
- 4: Vorschubrichtung
- 5: Winkel A
- 6: gedachte Linie zur Darstellung eines Schenkels eines in Vorschubrichtung spitz auslaufenden Dreiecks
- 7: gedachte Linie zur Darstellung der Basis eines in Vorschubrichtung spitz auslaufenden Dreiecks
- 8: Radius R

## Patentansprüche

1. Benetzungsdüse zur Herstellung eines mit Thermoplast benetzten Faserbands, **dadurch gekennzeichnet, dass** die Benetzungsdüse zwei Benetzungstaschen aufweist.

2. Benetzungsdüse nach Anspruch 1, **dadurch gekennzeichnet, dass** die Benetzungstaschen in der Draufsicht halbkreisförmig, halbovalförmig, oder in Form eines Teilkreises mit einem Winkel A von 120°- bis 135° mit angesetztem, in Vorschubrichtung spitz auslaufenden Dreieck ausgeformt sind.

3. Benetzungsdüse nach Anspruch 2, **dadurch gekennzeichnet, dass** der Radius R einer Benetzungstasche von 0,5 mm bis 2 mm, bevorzugt etwa 1 mm beträgt.

4. Benetzungsdüse nach einem der Ansprüche 1 bis 3, **dadurch gekennzeichnet, dass** sie aus einem vergüteten Werkzeugstahl gefertigt ist.

5. Benetzungsdüse nach einem der Ansprüche 1 bis 4, **dadurch gekennzeichnet, dass** die Benetzungsdüse aus mehreren zueinander beweglichen Teilen aufgebaut ist.

6. Verfahren zur Herstellung zur eines mit Thermoplast benetzten Faserbands, **dadurch gekennzeichnet, dass** eine Vorrichtung nach einem der Ansprüche 1 bis 5 verwendet wird

7. Verfahren zur Herstellung eines mit Thermoplast imprägnierten Faserbands, **dadurch gekennzeichnet, dass** in einem ersten Schritt gemäß Anspruch 6 ein mit Thermoplast benetztes Faserband hergestellt wird, und in einem weiteren Schritt durch Druckbeaufschlagung oder durch Druck-Scher-Vibrationsbeaufschlagung eine Imprägnierung durch geführt wird.

8. Mit Polymer imprägniertes Faserband, **dadurch gekennzeichnet, dass** wenigstens 90 % , besonders vorzugsweise wenigstens 95 % der Oberfläche aller Fasern eines mit Thermoplast imprägnierten Faserbands mit dem jeweils eingesetzten Thermoplasten imprägniert sind.

9. Mit Thermoplast imprägniertes Faserband nach Anspruch 8, **dadurch gekennzeichnet, dass** der Grad der Imprägnierung in jedem Breitenabschnitt des imprägnierten Faserbands maximal um 10 %, bevorzugt maximal um 5 %, besonders bevorzugt maximal um 2 % vom durchschnittlichen Grad der Imprägnierung des imprägnierten Faserbands abweicht.

10. Mehrschichtverbundwerkstoff, hergestellt aus einem imprägnierten Faserband nach Anspruch 8 oder 9.

11. Verwendung eines Mehrschichtverbunds nach Anspruch 10 für die Außenbeplankung und für Interieurblenden von Automobilen sowie als Gehäusematerial für Gehäuse für elektronische Geräte, bevorzugt portable elektronische Geräte, besonders bevorzugt Laptops oder Smartphones.
